# EUROPEAN PATENT APPLICATION

(11) **EP 2 450 623 A2**
(43) Date of publication of application: **09.05.2012**
(21) Application number: 10015204.0
(22) Date of filing: 01.12.2010
(51) Int. Cl.: F21S 9/03, H05B 33/08

(54) **Light emitting device**

(30) Priority: 04.11.2010 TW 099137931
(71) Applicant: Silicon Touch Technology, Inc., Hsin-Chu (TW)
(72) Inventor: Birin, Sajal, Hsinchu-City (TW)
(74) Representative: Hager, Thomas Johannes

(57) **Abstract**

The present invention provides a light emitting device (100), comprising: a solar cell unit (102), a capacitor unit (104), a charging circuit unit (106), an organic light emitting diode (OLED) unit (108), and a discharging circuit unit (110). The solar cell unit (102) is utilized for converting solar energy to generate a current. The capacitor unit (104) is coupled to the solar cell unit (102) and utilized for storing electric power. The charging circuit unit (106) is coupled between the solar cell unit (102) and the capacitor unit (104), and utilized for using the current to charge the capacitor unit (104). The OLED unit (108) is coupled to the capacitor unit (104). The discharging circuit unit (110) is coupled between the capacitor unit (104) and the OLED unit (108), and utilized for discharging the capacitor unit (104) and control lighting of the OLED unit (108).

## Description

The present invention relates to a light emitting device according to the pre-characterizing clauses of claim 1.

In general, the conventional light emitting device applied to most illumination systems (such as various illumination lamps or decoration lamps) and display systems (such as various display billboards or traffic lights) requires to be connected to an external power to operate normally. Thus, the conventional light emitting device is not able to efficiently reducing power consumption. Moreover, the conventional light emitting device is not flexible.

This is achieved by a light emitting device according to the independent claim 1. The respective dependent claims pertain to corresponding further developments and improvements.

As will be seen more clearly from the detailed description following below, one claimed light emitting device is disclosed. The light emitting device comprises: a solar cell unit, a capacitor unit, a charging circuit unit, an organic light emitting diode (OLED) unit, and a discharging circuit unit. The solar cell unit is utilized for converting solar energy to generate a current. The capacitor unit is coupled to the solar cell unit and utilized for storing electric power. The charging circuit unit is coupled between the solar cell unit and the capacitor unit, and utilized for using the current to charge the capacitor unit. The OLED unit is coupled to the capacitor unit. The discharging circuit unit is coupled between the capacitor unit and the OLED unit, and utilized for discharging the capacitor unit and control lighting of the OLED unit.

In the following, the invention is further illustrated by way of example, taking reference to the accompanying drawings. Thereof
FIG. 1 shows a simplified block diagram of a light emitting device in accordance with a first embodiment of the present invention.
FIG. 2 shows a simplified block diagram of a light emitting device in accordance with a second embodiment of the present invention.
FIG. 3 shows a simplified block diagram of a light emitting device in accordance with a third embodiment of the present invention.
FIG. 4 shows a simplified block diagram of a light emitting device in accordance with a fourth embodiment of the present invention.

Certain terms are used throughout the following description and the claims to refer to particular system components. As one skilled in the art will appreciate, manufacturers may refer to a component by different names. This document does not intend to distinguish between components that differ in name but not function. In the following discussion and in the claims, the terms "include", "including", "comprise", and "comprising" are used in an open-ended fashion, and thus should be interpreted to mean "including, but not limited to ..." The terms "couple" and "coupled" are intended to mean either an indirect or a direct electrical connection. Thus, if a first device couples to a second device, that connection may be through a direct electrical connection, or through an indirect electrical connection via other devices and connections.

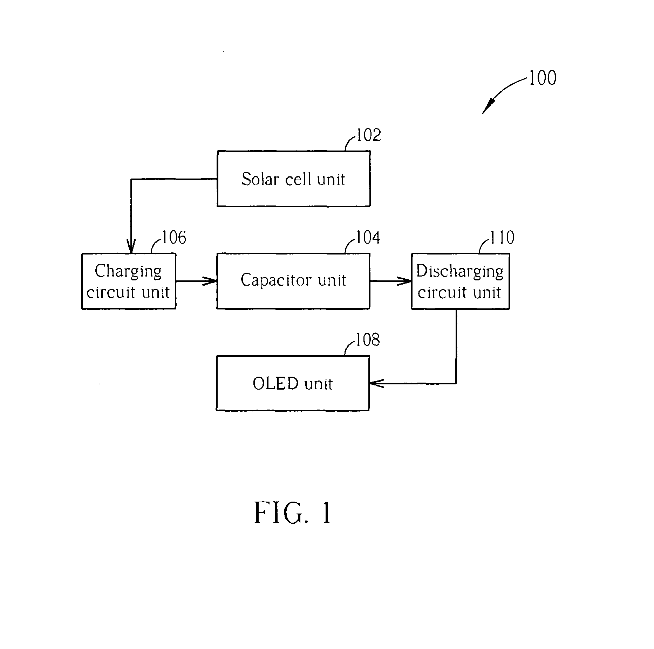

Please refer to FIG. 1. FIG. 1 shows a simplified block diagram of a light emitting device 100 in accordance with a first embodiment of the present invention. As shown in FIG. 1, the light emitting device 100 comprises: a solar cell unit 102, a capacitor unit 104, a charging circuit unit 106, an organic light emitting diode (OLED) unit 108, and a discharging circuit unit 110. The solar cell unit 102 is utilized for converting solar energy to generate a current. The capacitor unit 104 is coupled to the solar cell unit 102 and utilized for storing electric power, wherein the capacitor unit 104 can be a thin film super capacitor.

The charging circuit unit 106 is coupled between the solar cell unit 102 and the capacitor unit 104, and utilized for using the current generated by the solar cell unit 102 to charge the capacitor unit 104. The OLED unit 108 is coupled to the capacitor unit 104. The discharging circuit unit 110 is coupled between the capacitor unit 104 and the OLED unit 108, and utilized for discharging the capacitor unit 104 and control lighting of the OLED unit 108. Please note that the light emitting device 100 can be implemented in an illumination system or a display system. For example, the illumination system can be various illumination lamps or decoration lamps, and the display system can be various display billboards or traffic lights. Since the invention utilizes the OLED in the light emitting device 100, the light emitting device 100 can be rigid or flexible. Moreover, the light emitting device 100 can be integrated in a glass panel, and thus the light emitting device 100 can have ultra-thin thickness, wherein the glass panel can have different colors or transparency. For example, the glass panel can be transparent, opaque, or semi translucent. In this embodiment, the light emitting device 100 can normally operate without additional power device.

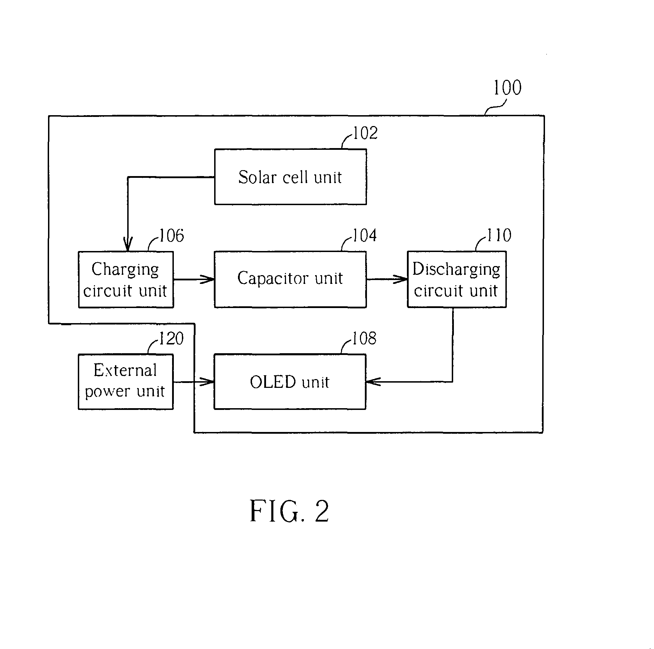

In a second embodiment of the invention, the light emitting device 100 in FIG. 1 can be further coupled to an external power unit 120, as shown in FIG 2. The external power unit 120 is utilized for providing backup power to the light emitting device 100.

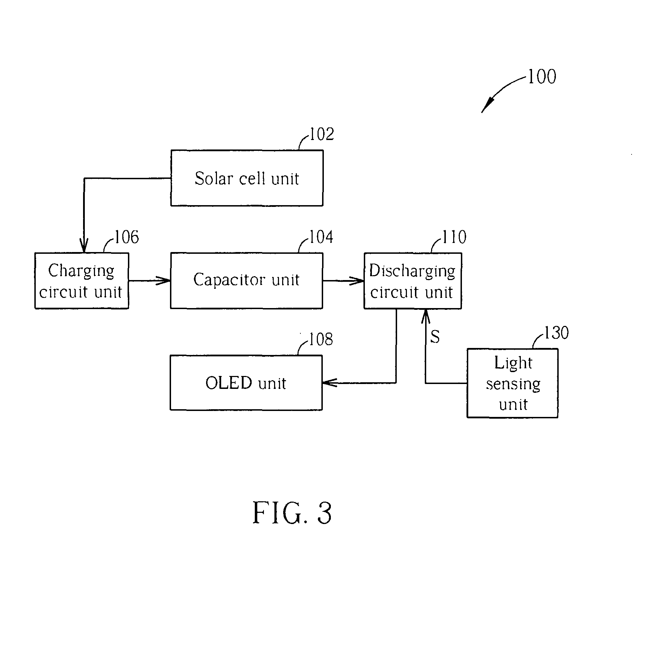

In a third embodiment of the invention, the light emitting device 100 in FIG. 1 can further comprise a light sensing unit 130, as shown in FIG 3. The light sensing unit 130 is coupled to the discharging circuit unit 110, and for sensing surrounding environmental light strength to generate a light sensing signal S, wherein the discharging circuit unit 110 discharges the capacitor unit 104 and control lighting of the OLED unit 108 according to the light sensing signal S.

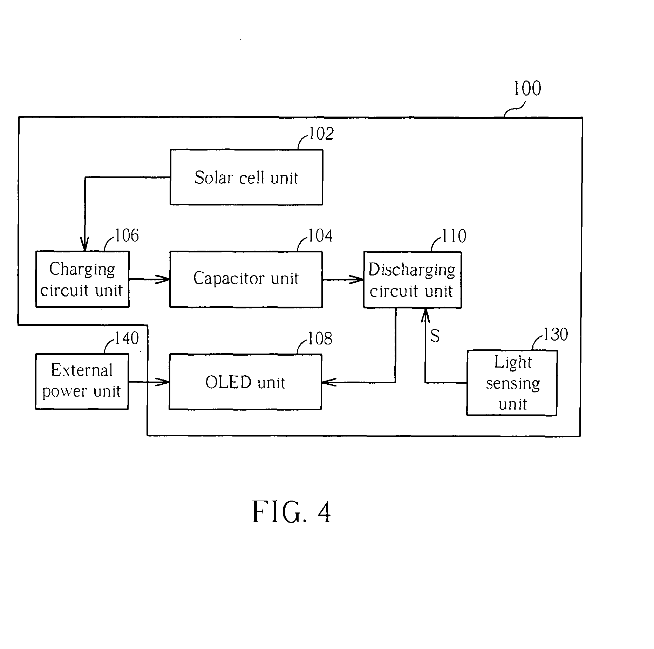

In a fourth embodiment of the invention, the light emitting device 100 in FIG. 3 can be further coupled to an external power unit 140, as shown in FIG 4. The external power unit 140 is utilized for providing backup power to the light emitting device 100. Herein, please note that the above embodiments are only for illustrative purposes and are not meant to be limitations of the present invention.

Briefly summarized, the light emitting device disclosed by the present invention is capable of efficiently reducing power consumption, and having ultra-thin thickness and flexibility. Additionally, the light emitting device of the present invention can be implemented in various illumination systems or a display systems.

The invention can be summarized as that the light emitting device comprises: a solar cell unit, a capacitor unit, a charging circuit unit, an organic light emitting diode (OLED) unit, and a discharging circuit unit. The solar cell unit is utilized for converting solar energy to generate a current. The capacitor unit is coupled to the solar cell unit and utilized for storing electric power. The charging circuit unit is coupled between the solar cell unit and the capacitor unit, and utilized for using the current to charge the capacitor unit. The OLED unit is coupled to the capacitor unit. The discharging circuit unit is coupled between the capacitor unit and the OLED unit, and utilized for discharging the capacitor unit and control lighting of the OLED unit.

## Claims

1. A light emitting device (100), comprising:
a solar cell unit (102), for converting solar energy to generate a current;
a capacitor unit (104), coupled to the solar cell unit (102), for storing electric
power;
a charging circuit unit (106), coupled between the solar cell unit (102) and
the capacitor unit (104), and utilized for using the current to charge the capacitor unit (104);
an organic light emitting diode (OLED) unit (108), coupled to the capacitor
unit (104); and
a discharging circuit unit (110), coupled between the capacitor unit (104) and
the OLED unit (108), and utilized for discharging the capacitor unit (104) and control lighting of the OLED unit (108).

2. The light emitting device (100) of claim 1, **characterized in that** the light emitting device (100) further comprises:
a light sensing unit (130), coupled to the discharging circuit unit (110), for
sensing surrounding environmental light strength to generate a light sensing signal, wherein the discharging circuit unit (110) discharges the capacitor unit (104) and control lighting of the OLED unit (108) according to the light sensing signal.

3. The light emitting device (100) of claim 1, **characterized in that** the light emitting device (100) is further coupled to an external power unit (120, 140) utilized for providing backup power to the light emitting device (100).

4. The light emitting device (100) of claim 1, **characterized in that** the capacitor unit (104) is a thin film super capacitor.

5. The light emitting device (100) of claim 1, **characterized in that** the light emitting device (100) is implemented in an illumination system or a display system.

6. The light emitting device (100) of claim 1, **characterized in that** the light emitting device (100) is rigid.

7. The light emitting device (100) of claim 1, **characterized in that** the light emitting device (100) is flexible.

8. The light emitting device (100) of claim 1, **characterized in that** the light emitting device (100) is integrated in a glass panel.

9. The light emitting device (100) of claim 8, **characterized in that** the glass panel has different colors or transparency.

10. The light emitting device (100) of claim 8, **characterized in that** the glass panel is transparent.

11. The light emitting device (100) of claim 8, **characterized in that** the glass panel is opaque.

12. The light emitting device (100) of claim 8, **characterized in that** the glass panel is semitranslucent.
